# EUROPÄISCHE PATENTSCHRIFT

(11) **EP 4 402 780 B1**
(45) Veröffentlichungstag und Bekanntmachung des Hinweises auf die Patenterteilung: **09.09.2026**
(21) Anmeldenummer: 22757904.2
(22) Anmeldetag: 26.07.2022
(51) Int. Cl.: H02K 5/15, H02K 7/102, H02K 15/14

(54) **ELEKTROMOTOR MIT BREMSANORDNUNG**
ELECTRIC MOTOR WITH BRAKE ASSEMBLY
MOTEUR ÉLECTRIQUE AVEC ENSEMBLE FREIN

(30) Priorität: 14.09.2021 DE 102021004627
(43) Veröffentlichungstag der Anmeldung: 24.07.2024
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE)
(86) Internationale Anmeldenummer: PCT/EP2022/070998
(87) Internationale Veröffentlichungsnummer: WO 2023/041230

(56) Entgegenhaltungen:
- JP-U- S5 441 908
- JP-U- S53 113 986
- JP-U- S55 102 355
- JP-U- S55 125 062
- JP-U- S56 161 972
- JP-U- S57 133 254
- US-A- 3 338 349

## Beschreibung

Die Erfindung betrifft einen Elektromotor mit Bremsanordnung.

Es ist allgemein bekannt, dass eine Bremsanordnung zum Abbremsen einer Welle vorgesehen ist.

**Aus der** DE 10 2015 552 A1 **ist ein Elektromotor mit einer elektromagnetisch betätigbaren Bremse bekannt.**

**Aus der** JP 2013 - 059 174 A **ist eine rotatorische Elektromaschine bekannt.**

**Aus der** DE 10 2017 000 845 A1 **ist eine elektromagnetisch betätigbare Bremsanordnung bekannt.**

**Aus der** DE 198 38 171 A1 **ist ein Elektromotor mit Bremse bekannt.**

**Aus der** JP S55 102355 U **ist als nächstliegender Stand der Technik eine Bremsanordung bekannt.**

**Aus der** JP S53 113986 U **ist eine elektromechanische Bremse bekannt.**

**Aus der** JP S54 41908 U **ist ein Bremsmotor bekannt.**

**Aus der** US 3 338 349 A **ist ein Elektromotor mit anmontierter elektromagnetisch betätigbarer Bremse bekannt.**

**Aus der** JP S57 133254 U **ist ein Elektromotor bekannt.**

Der Erfindung liegt daher die Aufgabe zugrunde, einen Elektromotor mit Bremsanordnung möglichst kompakt weiterzubilden.

Erfindungsgemäß wird die Aufgabe bei dem Elektromotor mit Bremsanordnung nach den in Anspruch 1 angegebenen Merkmalen gelöst.

Wichtige Merkmale der Erfindung bei dem Elektromotor mit Bremsanordnung sind, dass, der Elektromotor einen ersten Lagerflansch aufweist, in welchem ein erstes Lager der Rotorwelle des Elektromotors aufgenommen ist,
wobei der Elektromotor einen zweiten Lagerflansch aufweist, in welchem ein zweites Lager der Rotorwelle des Elektromotors aufgenommen ist,
wobei zwischen dem ersten Lagerflansch und dem zweiten Lagerflansch ein Statorgehäuse angeordnet ist,
wobei erste Schrauben mit ihrem Gewindebereich in den ersten Lagerflansch eingeschraubt sind und mit ihrem jeweiligen Schraubenkopf den Magnetkörper zum ersten Lagerflansch hindrücken,
wobei zweite Schrauben mit ihrem Gewindebereich in Gewindebohrungen des zweiten Lagerflansches oder in am zweiten Lagerflansch anliegenden Gewindemuttern eingeschraubt sind und mit ihrem jeweiligen Schraubenkopf den ersten Lagerflansch zum Statorgehäuse und/oder zum zweiten Lagerflansch hindrücken,
wobei dritte Schrauben mit ihrem Gewindebereich in Gewindebohrungen des zweiten Lagerflansches oder in am zweiten Lagerflansch anliegenden Gewindemuttern eingeschraubt sind und mit ihrem jeweiligen Schraubenkopf einen Magnetkörper der Bremsanordnung zum ersten Lagerflansch, zum Statorgehäuse und/oder zum zweiten Lagerflansch hindrücken,
Von Vorteil ist dabei, dass die ersten Schauben die Vorkomplettierung ermöglicht und die zweiten Schrauben einen Zusammenhalt des Motors auch bei Austausch des
Bremsbelagträgers und sonstigen Wartungsmaßnahmen an der Bremsanordnung ermöglichen. Des Weiteren ermöglichen die dritten Schrauben ein Festlegen des Magnetkörpers am Elektromotor und unterstützen auch die Wirkung der zweiten Schrauben.

Somit sind nur wenige Schrauben notwendig, um einen Zusammenhalt zu gewährleisten und trotzdem einen vorkomplettierten Zusammenbau sowie Wartungen in einfacher Weise zu ermöglichen. Außerdem sind die verschiedenen Schrauben in einer radial gerichteten Erhebung anordenbar, so dass in platzsparender Weise die Befestigung ausführbar ist.

Das Gehäuse des Motors ist im Wesentlichen quaderförmig ausführbar, sodass der runde Bremsbelagträger mit seinem zylindrischen Außenumfang gerade noch innerhalb des Gehäuses anordenbar ist und die Eckbereiche des Quaders für die Befestigung verwendbar ist. Somit ist der Elektromotor mit Bremsanordnung möglichst kompakt ausführbar. Allerdings muss die Befestigung radial außerhalb des Bremsbelagträgers der Bremsanordnung, der einen zylindrischen Außenumfang aufweist, angeordnet werden.

Somit ist ein möglichst geringer Bauraum für den Elektromotor notwendig.

Bei einer vorteilhaften Ausgestaltung weist der erste Lagerflansch an seinem radialen Außenumfang radial gerichtete Erhebungen auf, durch welche die zweiten Schrauben und dritten Schrauben hindurchragen. Von Vorteil ist dabei, dass der Bremsbelag des Bremsbelagträgers der Bremsanordnung möglichst weit radial ausgedehnt ist.

Bei einer vorteilhaften Ausgestaltung sind die ersten Schrauben mit ihrem Gewindebereich in Gewindebohrungen des ersten Lagerflansches eingeschraubt, welche in den radial gerichteten Erhebungen des ersten Lagerflansches angeordnet sind. Von Vorteil ist dabei, dass ein möglichst kleiner Bauraum notwendig ist.

Bei einer vorteilhaften Ausgestaltung ist im Magnetkörper eine bestrombare Ringwicklung aufgenommen, deren Ringachse koaxial zur Drehachse der Rotorwelle ausgerichtet ist. Von Vorteil ist dabei, dass die Bremsanordnung elektromagnetisch betätigbar ist.

Bei der Erfindung ist die radiale Richtung auf die Drehachse der Rotorwelle bezogen, wobei die axiale Richtung parallel zur Richtung dieser Drehachse ausgerichtet ist. Ebenso ist die Umfangsrichtung auf die Drehachse bezogen.

Bei einer vorteilhaften Ausgestaltung sind im Magnetkörper axial gerichtete Bolzen angeordnet, welche durch Ausnehmungen einer Ankerscheibe hindurchragen, insbesondere so, dass die Ankerscheibe axial bewegbar angeordnet ist und drehfest mit dem Magnetkörper verbunden ist. Von Vorteil ist dabei, dass die Bolzen radial innerhalb des Bremsbelags anordenbar sind.

Bei einer vorteilhaften Ausgestaltung ist ein Mitnehmer auf die Rotorwelle aufgesteckt und drehfest mit der Rotorwelle verbunden, insbesondere mittels Passfederverbindung,
wobei der Mitnehmer eine Außenverzahnung aufweist
oder die Rotorwelle selbst weist eine Außenverzahnung auf. Von Vorteil ist dabei, dass eine einfache Herstellung ermöglicht ist.

Bei einer vorteilhaften Ausgestaltung weist ein Bremsbelagträger der Bremsanordnung eine Innenverzahnung auf, welche mit der Außenverzahnung im Eingriff ist,
so, dass der Bremsbelagträger drehfest mit der Rotorwelle verbunden ist und axial bewegbar angeordnet ist. Von Vorteil ist dabei, dass eine einfache Herstellung ermöglicht ist.

Bei einer vorteilhaften Ausgestaltung ist die Ankerscheibe axial zwischen dem Bremsbelagträger und dem Magnetkörper angeordnet. Von Vorteil ist dabei, dass die Bremsanordnung einfach herstellbar ist.

Bei einer vorteilhaften Ausgestaltung drücken am Magnetkörper abgestützte Federelemente auf die Ankerscheibe. Von Vorteil ist dabei, dass bei Stromausfall die Bremsanordnung einfällt.

Bei einer vorteilhaften Ausgestaltung ist im ersten Lagerflansch ein Reibblech aufgenommen, das radial gerichtete Erhebungen aufweist, welche in radial gerichtete Vertiefungen des ersten Lagerflansches hineinragen,
wobei das Reibblech axial zwischen dem Bremsbelagträger und dem ersten Lagerflansch angeordnet ist, insbesondere auf der von der Ankerscheibe axial abgewandten Seite des Bremsbelagträgers,
insbesondere wobei die ersten Schrauben durch die radial gerichteten Erhebungen des Reibblechs hindurchragen. Von Vorteil ist dabei, dass das Reibblech formschlüssig im ersten Lagerflansch gesichert ist und somit Drehmoment übertragbar ist.

Bei einer vorteilhaften Ausgestaltung weist die Ankerscheibe radial gerichtete Erhebungen auf, an welchen Stifte befestigt sind, welche durch den Magnetkörper hindurchragen und von einem als Handlüftung fungierenden Hebelteil axial bewegbar sind. Von Vorteil ist dabei, dass eine Handlüftung in einfacher Weise realisierbar ist.

Bei einer vorteilhaften Ausgestaltung gehen die ersten Schrauben durch radial gerichtete Erhebungen der Ankerscheibe hindurch, welche in Umfangsrichtung beabstandet sind von denjenigen radial gerichteten Erhebungen der Ankerscheibe, an welchen die Stifte befestigt sind. Von Vorteil ist dabei, dass die radial gerichteten Erhebungen am Außenumfang in radialer Richtung hervorragen und somit ausreichend Platz bieten für die ersten Schrauben. Bei Verwendung von vier Erhebungen, die in Umfangsrichtung voneinander regelmäßig beabstandet sind, ist eine quaderförmige äußere Form des Elektromotors oder zumindest des ersten Lagerflansches ermöglicht.

Bei einer vorteilhaften Ausgestaltung ragen die radial gerichteten Erhebungen der Ankerscheibe jeweils in radial gerichtete Erhebungen des Magnetkörpers und/oder in die in radial gerichtete Erhebungen des ersten Lagerflansches hinein. Von Vorteil ist dabei, dass die Bremsanordnung kompakt ausführbar ist.

Bei einer vorteilhaften Ausgestaltung weist die Bolzen radial innerhalb des Bremsbelags des Bremsbelagträgers angeordnet sind. Von Vorteil ist dabei, dass die Bremsanordnung kompakt ausführbar ist.

Bei einer vorteilhaften Ausgestaltung sind die Bolzen auf kleinerem Radialabstand zur Drehachse der Rotorwelle angeordnet als der Bremsbelag, insbesondere als die Bolzen radial beabstandet sind von dem von dem Bremsbelag des Bremsbelagträgers überdeckten Radialabstandsbereichs. Von Vorteil ist dabei, dass die Bremsanordnung kompakt ausführbar ist.

Bei einer vorteilhaften Ausgestaltung sind die ersten Schrauben radial außerhalb des Bremsbelags des Bremsbelagträgers angeordnet. Von Vorteil ist dabei, dass die Bremsanordnung kompakt ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

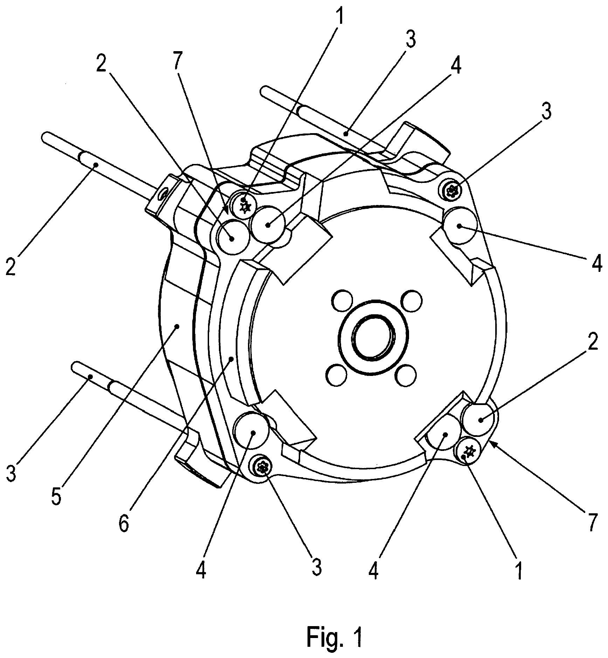

In der Figur 1 ist eine Bremsanordnung eines Elektromotors in Schrägansicht dargestellt.

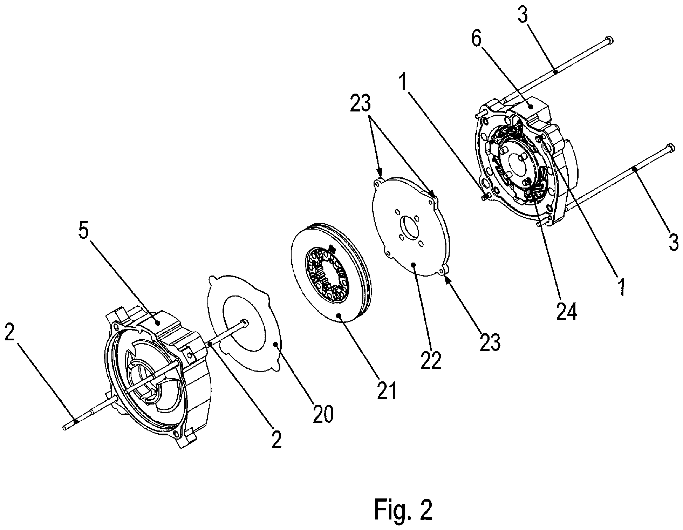

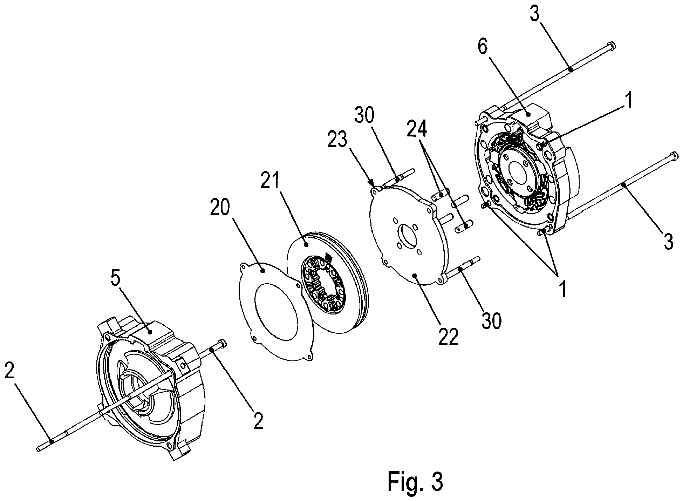

In der Figur 2 ist die Bremsanordnung explodiert dargestellt.

Wie in den Figuren dargestellt, weist die Bremsanordnung einen Lagerflansch 5 auf, in dem ein erstes Lager der Rotorwelle des Elektromotors aufnehmbar ist.

Ein zweites Lager der Rotorwelle ist in einem zweiten, in den Figuren nicht dargestellten Lagerflansch aufgenommen. Ein Statorgehäuse des Elektromotors ist zwischen dem ersten und dem zweiten Lagerflansch angeordnet. Der erste Lagerflansch 5 ist an der vom zweiten Lagerflansch abgewandten Seite des Statorgehäuses angeordnet.

Zur Verbindung und somit zum Zusammenhalten des Elektromotors sind Schrauben (2, 3) vorgesehen, welche von der Bremsanordnung zum zweiten Lagerschild hindurchragen und mit ihrem jeweiligen Gewindebereich in jeweilige Gewindebohrungen des zweiten Lagerschildes hineingeschraubt sind.

Der erste Lagerflansch 5 ist als Gussteil hergestellt und weist an seiner radial äußeren Oberfläche vier, insbesondere in Umfangsrichtung voneinander regelmäßig beabstandete, radial hervorragende Erhebungen für die Durchführung der Schrauben (2, 3) auf. Somit ist ein in dem ersten Lagerflansch 5 aufgenommenes, insbesondere eine zylindrische radiale Außenfläche aufweisendes Reibblech 20 und ein ebenfalls in dem ersten Lagerflansch 5 aufgenommener, insbesondere eine zylindrische radiale Außenfläche aufweisender, aufgenommener Bremsbelagträger 21 mit möglichst großem Durchmesser ausführbar. Somit ist die Bremsanordnung möglichst kompakt ausführbar.

Der Lagerflansch 5 weist eine topfförmige Ausnehmung auf, in welche das Reibblech 20 eingelegt ist, wobei radial gerichtete Erhebungen des Reibblechs 20 in entsprechende der radial gerichteten Erweiterungen der Ausnehmung hineinragen, so dass das Reibblech 20 in Umfangsrichtung formschlüssig gesichert ist.

Das Reibblech 20 ist als Stanzteil oder als mit Laser geschnittenes Blechteil gefertigt.

Das Reibblech 20 ist zwischen dem Bremsbelagträger 21 und dem Lagerflansch 5 angeordnet.

Der Bremsbelagträger 21 weist eine Innenverzahnung auf und axial beidseitig jeweils einen Bremsbelag. Die in den Figuren nicht gezeigte Rotorwelle des Elektronmotors ist mit einem hülsenartigen Mitnehmer drehfest verbunden, der eine Außenverzahnung aufweist.

Der Bremsbelagträger 21 ist auf die Außenverzahnung aufgesteckt, so dass die Innenverzahnung mit der Außenverzahnung im Eingriff ist. Somit ist der Bremsbelagträger 21 zwar drehfest mit der Rotorwelle verbunden, ist aber axial bewegbar angeordnet.

Die axiale Richtung ist parallel zur Drehachse der Rotorwelle ausgerichtet. Die radiale Richtung ist auf die Drehachse bezogen und ebenso die Umfangsrichtung.

Eine Ankerscheibe 22 weist ebenfalls radial gerichtete Erhebungen 23 an ihrem radialen Außenumfang auf, insbesondere welche in Umfangsrichtung voneinander regelmäßig beabstandet sind. Wiederum ragen diese radial gerichteten Erhebungen 23 der Ankerscheibe 22 in entsprechende nach radial außen gerichtete Vertiefungen hinein. Somit ist auch die Ankerscheibe in Umfangsrichtung formschlüssig, insbesondere also drehfest, in dem Lagerflansch 5 gesichert.

Die Ankerscheibe 22 besteht aus ferromagnetischem Material, insbesondere Stahl.

Ein Magnetkörper 6 der Bremsanordnung weist eine ringförmige Vertiefung auf, in welcher eine Spule aufgenommen ist, die als Ringwicklung ausgeführt ist.

Die Ringachse der Ringwicklung ist koaxial zur Drehachse der Rotorwelle ausgerichtet. Der Magnetkörper 6 ist mittels Schrauben 3 mit dem zweiten Lagerschild verbunden. Hierzu weist das zweite Lagerschild axial gerichtete Gewindebohrungen auf, in welche die Schrauben 3, welche durch Ausnehmungen hindurchgehen, welche in radial gerichteten Erhebungen des Magnetkörpers 6 angeordnet sind, und durch Ausnehmungen hindurchgehen, welche in den radial gerichteten Erhebungen am radial äußeren Umfang des Lagerflansches 5 angeordnet sind.

Somit drücken die Schraubenköpfe der Schrauben 3 den Magnetkörper 6 zum ersten Lagerflansch 5 hin, da Sie den zweiten Lagerflansch zum ersten Lagerflansch 5 hinziehen.

In den Magnetkörper 6 sind axial gerichtete Bolzen 24 eingesteckt, welche durch Ausnehmungen der Ankerscheibe 22 hindurchragen. Somit ist die Ankerscheibe relativ zum Magnetkörper zwar axial bewegbar, aber in Umfangsichtung formschlüssig gesichert, also drehfest verbunden.

Bei Bestromung der Spule wird die Ankerscheibe 22 entgegen der von am Magnetkörper 6 abgestützen Federelementen zum Magnetkörper 6 hingezogen, so dass der Bremsbelagträger 21 bei drehender Rotorwelle zwar mitdreht, aber keine Reibung, insbesondere keine wesentliche Reibung, erzeugt.

Bei Nichtbestromung der Spule drücken die Federelemente in axialer Richtung auf die Ankerscheibe 22, so dass die Ankerscheibe 21 auf den Bremsbelagträger 21 gedrückt wird, der auf das Reibblech 20 gedrückt wird. Somit wird dann Reibkraft erzeugt.

Für eine Handlüftung, mit der ein Lüften der Bremsanordnung erzwingbar ist, sind in den radial gerichteten Erhebungen 23, die am äußeren Umfang der Ankerscheibe 22 angeordnet sind, axial durchgehende Ausnehmungen angeordnet, in welchen Stifte 30 befestigt sind, die durch in den radial gerichteten Erhebungen des Magnetkörpers 6 angeordnete, jeweilige, durch den Magnetkörper 6 durchgehende Ausnehmungen hindurchragen.

Die Stifte 30 sind von einem um eine zur Drehachse der Rotorwelle senkrecht ausgerichtete Schwenkachse schwenkbar angeordneten Hebelteil auf der von der Ankerscheibe 22 abgewandten Seite des Magnetkörpers 6 axial bewegbar, insbesondere abhängig vom zugehörigen Schwenkwinkel, insbesondere des Handlüft-Hebels der Handlüftung.

Die Schrauben 2 sind mit ihrem Gewindebereich in Gewindebohrungen des zweiten Lagerflansches eingeschraubt, so dass die Schraubenköpfe der Schrauben 2 den ersten Lagerflansch 5 an das Statorgehäuse andrücken, das wiederum an den zweiten Lagerflansch angedrückt wird. Somit ist der Elektromotor zusammengehalten, insbesondere auch bei der Montage, bei Wartung und/oder Service.

Die weiteren Schrauben 3 gehen durch den Magnetkörper 6 und den ersten Lagerflansch 5 hindurch. Diese weiteren Schrauben 3 werden ebenfalls mit ihrem Gewindebereich in Gewindebohrungen des zweiten Lagerflansches eingeschraubt, so dass die Schraubenköpfe der weiteren Schrauben 3 den Magnetkörper 6 an den ersten Lagerflansch 5 andrücken, insbesondere so dass dieser dann an das Statorgehäuse angedrückt ist, der dann wiederum an den zweiten Lagerflansch angedrückt ist.

Somit ist die Bremsanordnung am Motor mit vier Schrauben (2, 3) am Umfang befestigt. Anpresskräfte sind somit in Umfangsrichtung möglichst gleichmäßig verteilt und Dichtungen gleichmäßig angedrückt.

Insbesondere sind also zwei Schrauben 2 vorgesehen, um den ersten Lagerflansch 5 mit dem zweiten Lagerflansch zu verbinden, und zwei weitere Schrauben 3, um den Magnetkörper mit dem zweiten Lagerflansch, insbesondere A-Lagerschild, zu verbinden.

Der aus den Lagerflanschen, dem Statorgehäuse und dem Magnetkörper 6 gebildete Stapel ist somit durch die vier Schrauben (2, 3) zusammengehalten.

Weitere Schrauben 1 ragen durch den Magnetkörper durch und sind mit ihrem Gewindebereich in Gewindebohrungen eingeschraubt, die wiederum in den radial gerichteten Erhebungen des Lagerflansches 5 angeordnet sind.

Mittels der Schrauben 1 ist die Bremsanordnung vorkomplettiert am ersten Lagerflansch 5 anordenbar. Mittels der Schrauben 2 wird das Motorgehäuse zusammengehalten, welches aus den beiden Lagerflanschen und dem Statorgehäuse gebildet ist. Mittels der Schrauben 3 wird der Magnetkörper am zweiten Lagerflansch befestigt, so dass der auf den ersten Lagerflansch gedrückt ist.

Insgesamt ist also der Magnetkörper 5 mittels vier Schrauben (1, 3) gehalten. Vier Schrauben (2, 3) halten das Motorgehäuse 6 zusammen, wobei zwei dieser vier letztgenannten Schrauben 3 den Magnetkörper 6 am Elektromotor festlegen, insbesondere festspannen.

Um die Handlüftung in verschiedenen Richtungen ausrichtbar anmontieren zu können, sind vier Löcher im Magnetkörper 6 angeordnet, wobei zwei Stifte 30 durch zwei der vier Löcher hindurchragen. Somit sind die unbenutzten Löcher für eine andere Montagerichtung, insbesondere Handlüftlage, der Handlüftung vorgesehen.

Bei weiteren erfindungsgemäßen Ausführungsbeispielen ist die Außenverzahnung direkt auf der Rotorwelle angeordnet, wobei die Innenverzahnung des Bremsbelagträgers 21 im Eingriff ist mit der Außenverzahnung.

Bei weiteren erfindungsgemäßen Ausführungsbeispielen werden statt der Schrauben Gewindestifte verwendet, auf welche Muttern aufgeschraubt sind.

Bei weiteren erfindungsgemäßen Ausführungsbeispielen sind statt der Stifte 30 Stiftschrauben eingesetzt.

Bei anderen erfindungsgemäßen Ausführungsbeispielen weist das zweite Lagerschild statt der axial gerichteten Gewindebohrungen axial gerichtete Durchgangslöcher auf, in welche die Schrauben 3 durchgesteckt werden und in die Gewinde vom ersten Lagerschild eingeschraubt werden.

### Bezugszeichenliste

1 Schraube
2 Langschraube
3 Langschraube
4 Verschlussstopfen
5 Lagerflansch
6 Magnetkörper
7 radial hervorstehende Bereiche des Magnetkörpers 6, insbesondere Ohren
20 Reibblech
21 Bremsbelagträger
22 Ankerscheibe
23 radial gerichtete Erhebungen, insbesondere Ohren
24 Bolzen
30 Stift

## Patentansprüche

1. Elektromotor mit Bremsanordnung,
wobei der Elektromotor einen ersten Lagerflansch (5) aufweist, in welchem ein erstes Lager der Rotorwelle des Elektromotors aufgenommen ist,
wobei der Elektromotor einen zweiten Lagerflansch aufweist, in welchem ein zweites Lager der Rotorwelle des Elektromotors aufgenommen ist,
wobei zwischen dem ersten Lagerflansch und dem zweiten Lagerflansch ein Statorgehäuse angeordnet ist,
wobei die Bremsanordnung einen Magnetkörper (6) aufweist, der eine ringförmige Vertiefung aufweist, in welcher eine Spule aufgenommen ist, die als Ringwicklung ausgeführt ist,
wobei
erste Schrauben (1) mit ihrem Gewindebereich in den ersten Lagerflansch eingeschraubt sind und mit ihrem jeweiligen Schraubenkopf den Magnetkörper zum ersten Lagerflansch hindrücken, insbesondere zur Vormontage der Bremse,
wobei zweite Schrauben (2) mit ihrem Gewindebereich in Gewindebohrungen des zweiten Lagerflansches oder in am zweiten Lagerflansch anliegenden Gewindemuttern eingeschraubt sind und mit ihrem jeweiligen Schraubenkopf den ersten Lagerflansch zum Statorgehäuse und/oder zum zweiten Lagerflansch hindrücken, insbesondere zur Vormontage des Motors,
wobei dritte Schrauben (3) mit ihrem Gewindebereich in Gewindebohrungen des zweiten Lagerflansches oder in am zweiten Lagerflansch anliegenden Gewindemuttern eingeschraubt sind und mit ihrem jeweiligen Schraubenkopf den Magnetkörper der Bremsanordnung zum ersten Lagerflansch, zum Statorgehäuse und/oder zum zweiten Lagerflansch hindrücken, insbesondere zum Zusammenhalten des aus dem Elektromotor und der Bremsanordnung gebildeten Bremsmotors mittels der Spannkraft von Schrauben (3), insbesondere von vier Schrauben (3).

2. Elektromotor nach Anspruch 1,
**dadurch gekennzeichnet, dass**
der erste Lagerflansch (5) an seinem radialen Außenumfang radial gerichtete Erhebungen aufweist, durch welche die zweiten Schrauben (2) und dritten Schrauben (3) hindurchragen.

3. Elektromotor nach einem der vorangegangenen Ansprüche,
**dadurch gekennzeichnet, dass**
die ersten Schrauben (1) mit ihrem Gewindebereich in Gewindebohrungen eingeschraubt sind, welche in den Erhebungen angeordnet sind.

4. Elektromotor nach einem der vorangegangenen Ansprüche,
**dadurch gekennzeichnet, dass**
im Magnetkörper eine bestrombare Ringwicklung aufgenommen ist, deren Ringachse koaxial zur Drehachse der Rotorwelle ausgerichtet ist.

5. Elektromotor nach einem der vorangegangenen Ansprüche,
**dadurch gekennzeichnet, dass**
die radiale Richtung auf die Drehachse der Rotorwelle bezogen ist,
wobei die axiale Richtung parallel zur Richtung dieser Drehachse ausgerichtet ist.

6. Elektromotor nach einem der vorangegangenen Ansprüche,
**dadurch gekennzeichnet, dass**
im Magnetkörper axial gerichtete Bolzen angeordnet sind, welche durch Ausnehmungen einer Ankerscheibe hindurchragen, insbesondere so, dass die Ankerscheibe axial bewegbar angeordnet ist und drehfest mit dem Magnetkörper verbunden ist.

7. Elektromotor nach einem der vorangegangenen Ansprüche,
**dadurch gekennzeichnet, dass**
ein Mitnehmer auf die Rotorwelle aufgesteckt ist und drehfest mit der Rotorwelle verbunden ist, insbesondere mittels Passfederverbindung,
wobei der Mitnehmer eine Außenverzahnung aufweist
oder dass die Rotorwelle eine Außenverzahnung aufweist.

8. Elektromotor nach einem der vorangegangenen Ansprüche,
**dadurch gekennzeichnet, dass**
ein Bremsbelagträger der Bremsanordnung eine Innenverzahnung aufweist, welche mit der Außenverzahnung im Eingriff ist,
so, dass der Bremsbelagträger drehfest mit der Rotorwelle verbunden ist und axial bewegbar angeordnet ist.

9. Elektromotor nach einem der vorangegangenen Ansprüche,
**dadurch gekennzeichnet, dass**
die Ankerscheibe axial zwischen dem Bremsbelagträger und dem Magnetkörper angeordnet ist.

10. Elektromotor nach einem der vorangegangenen Ansprüche,
**dadurch gekennzeichnet, dass**
am Magnetkörper abgestützte Federelemente auf die Ankerscheibe drücken.

11. Elektromotor nach einem der vorangegangenen Ansprüche,
**dadurch gekennzeichnet, dass**
im ersten Lagerflansch ein Reibblech aufgenommen ist, das radial gerichtete Erhebungen aufweist, welche in radial gerichtete Vertiefungen des ersten Lagerflansches hineinragen,
wobei das Reibblech axial zwischen dem Bremsbelagträger und dem ersten Lagerflansch angeordnet ist, insbesondere auf der von der Ankerscheibe axial abgewandten Seite des Bremsbelagträgers,
insbesondere wobei die ersten Schrauben (1) durch die radial gerichteten Erhebungen des Reibblechs hindurchragen.

12. Elektromotor nach einem der vorangegangenen Ansprüche,
**dadurch gekennzeichnet, dass**
die Ankerscheibe radial gerichtete Erhebungen aufweist, an welchen Stifte befestigt sind, welche durch den Magnetkörper hindurchragen und von einem als Handlüftung fungierenden Hebelteil axial bewegbar sind.

13. Elektromotor nach einem der vorangegangenen Ansprüche,
**dadurch gekennzeichnet, dass**
die ersten Schrauben durch radial gerichtete Erhebungen der Ankerscheibe hindurchgehen, welche in Umfangsrichtung beabstandet sind von denjenigen radial gerichteten Erhebungen der Ankerscheibe, an welchen die Stifte befestigt sind.

14. Elektromotor nach einem der vorangegangenen Ansprüche,
**dadurch gekennzeichnet, dass**
die radial gerichteten Erhebungen der Ankerscheibe jeweils in radial gerichtete Erhebungen des Magnetkörpers und/oder in die in radial gerichtete Erhebungen des ersten Lagerflansches hineinragen.

15. Elektromotor nach einem der vorangegangenen Ansprüche,
**dadurch gekennzeichnet, dass**
die Bolzen radial innerhalb des Bremsbelags des Bremsbelagträgers angeordnet sind,
und/oder dass
die Bolzen auf kleinerem Radialabstand zur Drehachse der Rotorwelle angeordnet sind als der Bremsbelag, insbesondere die Bolzen radial beabstandet sind von dem von dem Bremsbelag des Bremsbelagträgers überdeckten Radialabstandsbereichs,
und/oder dass
die ersten Schrauben radial außerhalb des Bremsbelags des Bremsbelagträgers angeordnet sind.

## Claims

1. An electric motor with brake assembly,
wherein the electric motor has a first bearing flange (5) in which there is received a first bearing of the rotor shaft of the electric motor,
wherein the electric motor has a second bearing flange in which there is received a second bearing of the rotor shaft of the electric motor,
wherein a stator housing is arranged between the first bearing flange and the second bearing flange,
wherein the brake assembly has a magnet body (6) which has an annular depression in which there is received a coil in the form of an annular winding,
wherein first screws (1) are screwed by means of their threaded region into the first bearing flange and press the magnet body towards the first bearing flange by means of their respective screw heads, in particular for pre-assembly of the brake,
wherein second screws (2) are screwed by means of their threaded region into tapped bores of the second bearing flange or into threaded nuts resting against the second bearing flange and with their respective screw heads press the first bearing flange towards the stator housing and/or towards the second bearing flange, in particular for pre-assembly of the brake,
wherein third screws (3) are screwed by means of their threaded region into tapped bores of the second bearing flange or into threaded nuts resting against the second bearing flange and with their respective screw heads press the magnet body of the brake assembly towards the first bearing flange, towards the stator housing and/or towards the second bearing flange, in particular for holding together of the brake motor, formed from the electric motor and the brake assembly, by means of the clamping force of screws (3), in particular of four screws (3).

2. An electric motor according to claim 1,
**characterised in that**
the radial outer circumference of the first bearing flange (5) has radially directed protuberances through which there project the second screws (2) and third screws (3).

3. An electric motor according to any one of the preceding claims,
**characterised in that**
the first screws (1) are screwed by means of their threaded region into tapped bores which are arranged in the protrusions.

4. An electric motor according to any one of the preceding claims,
**characterised in that**
an annular winding, which can be supplied with current, is received in the magnet body and its ring axis is oriented coaxially with the rotational axis of the rotor shaft.

5. An electric motor according to any one of the preceding claims,
**characterised in that**
the radial direction is related to the rotational axis of the rotor shaft,
wherein the axial direction is oriented parallel to the direction of this rotational axis.

6. An electric motor according to any one of the preceding claims,
**characterised in that**
arranged in the magnet body there are axially-directed bolts which project through cutouts of an armature plate, in particular such that the armature plate is arranged in an axially movable manner and is connected to the magnet body in a rotationally-fixed manner.

7. An electric motor according to any one of the preceding claims,
**characterised in that**
an entrainment means is placed onto the rotor shaft and connected to the rotor shaft in a rotationally-fixed manner, in particular by means of a feather key connection,
wherein the entrainment means has external teeth
or **in that** the rotor shaft has external teeth.

8. An electric motor according to any one of the preceding claims,
**characterised in that**
a brake lining carrier of the brake assembly has internal teeth which engage the external teeth, so that the brake lining carrier is connected to the rotor shaft in a rotationally-fixed manner and is arranged in an axially movable manner.

9. An electric motor according to any one of the preceding claims,
**characterised in that**
the armature plate is arranged axially between the brake lining carrier and the magnet body.

10. An electric motor according to any one of the preceding claims,
**characterised in that**
spring elements supported on the magnet body press onto the armature plate.

11. An electric motor according to any one of the preceding claims,
**characterised in that**
a friction plate is received in the first bearing flange and has radially directed protrusions which project into radially directed depressions of the first bearing flange,
wherein the friction plate is arranged axially between the brake lining carrier and the first bearing flange, in particular on that side of the brake lining carrier axially remote from the armature plate,
in particular wherein the first screws (1) project through the radially directed protrusions of the friction plate.

12. An electric motor according to any one of the preceding claims,
**characterised in that**
the armature plate has radially directed protrusions to which there are secured pins which project through the magnet body and which are movable axially by a lever part acting as a hand release.

13. An electric motor according to any one of the preceding claims,
**characterised in that**
the first screws pass through radially directed protrusions of the armature plate, which protrusions are spaced apart in a circumferential direction from those radially directed protrusions of the armature plate to which the pins are secured.

14. An electric motor according to any one of the preceding claims,
**characterised in that**
the radially directed protrusions of the armature plate each project into radially directed protrusions of the magnet body and/or into the radially directed protrusions of the first bearing flange.

15. An electric motor according to any one of the preceding claims,
**characterised in that**
the bolts are arranged radially within the brake lining of the brake lining carrier,
and/or **in that**
the bolts are arranged at a shorter radial distance from the rotational axis of the rotor shaft than is the brake lining, in particular the bolts are radially spaced apart from the radial distance region covered by the brake lining of the brake lining carrier,
and/or **in that**
the first screws are arranged radially exterior to the brake lining of the brake lining carrier.

## Revendications

1. Moteur électrique avec dispositif de freinage, le moteur électrique comprenant un premier flasque de palier (5) dans lequel un premier palier de l'arbre de rotor du moteur électrique est logé, le moteur électrique comprenant un deuxième flasque de palier dans lequel un deuxième palier de l'arbre de rotor du moteur électrique est logé, un boîtier de stator étant disposé entre le premier flasque de palier et le deuxième flasque de palier, le dispositif de freinage comprenant un corps magnétique (6) qui présente une cavité annulaire dans laquelle une bobine est logée, laquelle est réalisée comme enroulement annulaire, dans lequel des premières vis (1) sont vissées, par leur zone filetée, dans le premier flasque de palier et, par leur tête de vis respective, appuient le corps magnétique contre le premier flasque de palier, en particulier pour le prémontage du frein, dans lequel des deuxièmes vis (2) sont vissées, par leur zone filetée, dans des trous taraudés du deuxième flasque de palier ou dans des écrous filetés appliqués contre le deuxième flasque de palier, et, par leur tête de vis respective, appuient le premier flasque de palier contre le boîtier de stator et/ou contre le deuxième flasque de palier, en particulier pour le prémontage du moteur, dans lequel des troisièmes vis (3) sont vissées, par leur zone filetée, dans des trous taraudés du deuxième flasque de palier ou dans des écrous filetés appliqués contre le deuxième flasque de palier, et, par leur tête de vis respective, appuient le corps magnétique du dispositif de freinage contre le premier flasque de palier, contre le boîtier de stator et/ou contre le deuxième flasque de palier, en particulier pour maintenir ensemble le moteur de frein formé à partir du moteur électrique et du dispositif de freinage au moyen de la force de serrage des vis (3), en particulier de quatre vis (3).

2. Moteur électrique selon la revendication 1, **caractérisé en ce que** le premier flasque de palier (5) présente, sur sa circonférence extérieure radiale, des saillies orientées radialement à travers lesquelles les deuxièmes vis (2) et troisièmes vis (3) traversent.

3. Moteur électrique selon l'une des revendications précédentes, **caractérisé en ce que** les premières vis (1) sont vissées, par leur zone filetée, dans des trous taraudés qui sont disposés dans les saillies.

4. Moteur électrique selon l'une des revendications précédentes, **caractérisé en ce qu'**un enroulement annulaire pouvant être alimenté en courant est logé dans le corps magnétique, dont l'axe annulaire est aligné coaxialement à l'axe de rotation de l'arbre de rotor.

5. Moteur électrique selon l'une des revendications précédentes, **caractérisé en ce que** la direction radiale est définie par rapport à l'axe de rotation de l'arbre de rotor, la direction axiale étant orientée parallèlement à la direction de cet axe de rotation.

6. Moteur électrique selon l'une des revendications précédentes, **caractérisé en ce que** des boulons orientés axialement sont disposés dans le corps magnétique, lesquels traversent des évidements d'un disque d'ancrage, en particulier de telle sorte que le disque d'ancrage est disposé mobile axialement et solidaire en rotation avec le corps magnétique.

7. Moteur électrique selon l'une des revendications précédentes, **caractérisé en ce qu'**un accouplement est monté sur l'arbre de rotor et solidaire en rotation avec l'arbre de rotor, en particulier au moyen d'une liaison par clavette, l'accouplement présentant une denture extérieure ou l'arbre de rotor présentant une denture extérieure.

8. Moteur électrique selon l'une des revendications précédentes, **caractérisé en ce qu'**un support de garniture de frein du dispositif de freinage présente une denture intérieure, laquelle est en engrènement avec la denture extérieure, de sorte que le support de garniture de frein est solidaire en rotation avec l'arbre de rotor et est disposé mobile axialement.

9. Moteur électrique selon l'une des revendications précédentes, **caractérisé en ce que** le disque d'ancrage est disposé axialement entre le support de garniture de frein et le corps magnétique.

10. Moteur électrique selon l'une des revendications précédentes, **caractérisé en ce que** des éléments élastiques appuyés sur le corps magnétique appuient sur le disque d'ancrage.

11. Moteur électrique selon l'une des revendications précédentes, **caractérisé en ce qu'**une tôle de friction est logée dans le premier flasque de palier, laquelle présente des saillies orientées radialement qui s'étendent dans des cavités orientées radialement du premier flasque de palier, la tôle de friction étant disposée axialement entre le support de garniture de frein et le premier flasque de palier, en particulier du côté du support de garniture de frein opposé axialement au disque d'ancrage, en particulier les premières vis (1) traversant les saillies orientées radialement de la tôle de friction.

12. Moteur électrique selon l'une des revendications précédentes, **caractérisé en ce que** le disque d'ancrage présente des saillies orientées radialement, sur lesquelles sont fixées des broches, lesquelles traversent le corps magnétique et sont mobiles axialement par un levier agissant comme dispositif de défreinage manuel.

13. Moteur électrique selon l'une des revendications précédentes, **caractérisé en ce que** les premières vis traversent des saillies orientées radialement du disque d'ancrage, lesquelles sont espacées en direction circonférentielle de celles des saillies orientées radialement du disque d'ancrage sur lesquelles les broches sont fixées.

14. Moteur électrique selon l'une des revendications précédentes, **caractérisé en ce que** les saillies orientées radialement du disque d'ancrage s'étendent respectivement dans des saillies orientées radialement du corps magnétique et/ou dans les saillies orientées radialement du premier flasque de palier.

15. Moteur électrique selon l'une des revendications précédentes, **caractérisé en ce que** les boulons sont disposés radialement à l'intérieur de la garniture de frein du support de garniture de frein, et/ou que les boulons sont disposés à une distance radiale plus petite de l'axe de rotation de l'arbre de rotor que la garniture de frein, en particulier les boulons étant espacés radialement de la zone de distance radiale recouverte par la garniture de frein du support de garniture de frein, et/ou que les premières vis sont disposées radialement à l'extérieur de la garniture de frein du support de garniture de frein.
